# EUROPÄISCHE PATENTSCHRIFT

(11) **EP 2 318 740 B1**
(45) Veröffentlichungstag und Bekanntmachung des Hinweises auf die Patenterteilung: **21.03.2012**
(21) Anmeldenummer: 10711158.5
(22) Anmeldetag: 26.03.2010
(51) Int. Cl.: F16K 7/02, F16L 29/02

(54) **FLUIDVERBINDUNGSEINRICHTUNG**
FLUID CONNECTION DEVICE
DISPOSITIF DE COMMUNICATION FLUIDIQUE

(30) Priorität: 13.08.2009 DE 102009037078
(43) Veröffentlichungstag der Anmeldung: 11.05.2011
(73) Patentinhaber: GL GmbH Metall- und Werkstatttechnik, 72636 Frickenhausen (DE)
(72) Erfinder: HENZLER, Adolf, 72622 Nürtingen (DE)
(74) Vertreter: Rüger, Barthelt & Abel
(86) Internationale Anmeldenummer: PCT/EP2010/001909
(87) Internationale Veröffentlichungsnummer: WO 2011/018127

(56) Entgegenhaltungen:
- WO-A1-02/079679
- DE-A1-102007 061 753
- GB-A- 251 595
- GB-A- 2 280 489

## Beschreibung

Das Nachfüllen von Tanks erfolgt üblicherweise durch einfaches Eingießen. Sobald es sich bei den Flüssigkeiten jedoch um Flüssigkeiten handelt, von denen eine starke Geruchsbelästigung oder sogar eine gesundheitsgefährdende Wirkung ausgeht, muss das Nachfüllen in einer Weise geschehen, dass Dämpfe möglichst nicht entweichen können. Ein Beispiel hierfür ist das Nachfüllen der Flüssigkeit die beim SCR (selected catalytic reduction)-Verfahren bei Dieselmotoren angewendet wird. Dieses Verfahren ist auch unter der Bezeichnung Bluetec bekannt. Die hierbei verwendete Flüssigkeit wird unter dem Handelsnamen "AdBlue" geführt. Es handelt sich dabei um eine 32,5 %ige wässrige Harnstofflösung. Das Verfahren wird angewandt um den NOₓ-Anteil im Abgas zu vermindern und die Stickoxide in Stickstoff und Wasser umzuwandeln.

Aus GB 2 280 489 A ist ein Ventil bekannt, das beispielsweise für die Frontscheiben-Wascheinrichtung eines Fahrzeugs geeignet ist. Ein Schaft des Ventils ist mit einer Fluidquelle verbunden. Der Schaft weist stromabwärts der Fluidquelle wenigstens zwei benachbarte Radialöffnungen auf, die durch eine Trennwand fluidisch voneinander getrennt sind. Im Bereich der beiden Radialöffnungen ist der Schaft von einer elastischen zylindrischen Hülse umgeben. Stromabwärts der Radialöffnungen weist der Schaft einen Fluidaustritt auf, der in einen Innenraum mündet, so dass der Fluiddruck am Fluidaustritt auf die Außenfläche der Hülse einwirkt. Ist der Fluiddruck der Fluidquelle größer als der Druck im Innenraum, so wird die Hülse radial nach außen gedehnt und es entsteht ein Ringkanal zwischen der Hülse und dem Schaft um die beiden Radialöffnungen, die dadurch fluidisch verbunden werden. Ist der Druck der Fluidquelle maximal so groß wie der Druck im Innenraum auf die Außenfläche der Hülse, so liegt diese dichtend am Schaft an und unterbindet die Fluidströmung durch die Radialöffnungen.

Ausgehend hiervon soll eine Fluidverbindungseinrichtung geschaffen werden, die kostengünstig herstellbar ist, damit sie zusammen mit dem Kanister, aus dem die Flüssigkeit nachgefüllt wurde, entsorgt werden kann.

Diese Aufgabe wird erfindungsgemäß durch eine Fluidverbindungseinrichtung mit den Merkmalen des Anspruches 1 gelöst.

Die erfindungsgemäße Fluidverbindungseinrichtung weist einen rohrförmigen Schaft auf, der wenigstens zwei Seitenöffnungen enthält, die in Längsrichtung des Schaftes einander benachbart sind. Zwischen den beiden Seitenöffnungen besteht innerhalb des rohrförmigen Schaftes keine strömungsmäßige Verbindung, denn dort ist eine entsprechende Trennwand vorgesehen. Die beiden Seitenöffnungen können nur über die Außenseite des Schaftes strömungsmäßig miteinander kommunizieren.

Auf der Außenseite des rohrförmigen Schaftes sitzt eine elastomere Manschette, die den Schaft auf der Höhe der wenigstens zwei Seitenöffnungen umgibt. Im ungekuppelten Ruhezustand liegt die Manschette abdichtend auf den Seitenöffnungen auf, so dass wenigstens eine vorzugsweise jede Seitenöffnung für sich verschlossen ist.

Die elastomere Manschette ist in Längsrichtung komprimierbar. Bei einer axialen Kompression entsteht zwischen der Außenseite des Schaftes und der Innenseite der Manschette ein nach außen abgedichteter Ringspalt oder Ringraum, der eine Fluidverbindung zwischen den beiden Seitenöffnungen ermöglicht.

Es ist ferner eine Kompressionseinrichtung vorhanden um die Manschette bei Bedarf in Längsrichtung zu komprimieren. Wenn eine derartige Fluidverbindungseinrichtung verwendet wird, ist bis zum Komprimieren der Manschette ein beispielsweise an einer Seite an den Schaft angeschlossener Kanister abgedichtet verschlossen. Durch Einführen des Schaftes in den Tank, in dem die Flüssigkeit aus dem Behälter umzufüllen ist, wird die Manschette in Achsrichtung komprimiert, so dass durch den Schaft aus dem Kanister die Flüssigkeit zu der seitlichen Öffnung fließt, von dort über den Ringspalt zu der anderen Seitenöffnung und von hier aus wieder über den rohrförmigen Schaft in den nachzufüllenden Tank.

Die Kraft die notwendig ist, um die Manschette in der gewünschten Weise zu komprimieren, damit sie den Ringspalt erzeugt, kann vermindert werden, wenn der rohrförmige Schaft im Bereich der Seitenöffnungen eine tonnenförmige Bombierung aufweist. Dadurch wird die Manschette leicht vorgeformt und kann bei Axialbelastung leichter in der gewünschten Richtung sich ausbeulen.

Von Vorteil kann es sein, wenn der größte Durchmesser der tonnenförmigen Bombierung auf der Höhe der Trennwand zwischen den Seitenöffnungen liegt, d.h. etwa in der Mitte zwischen den Seitenöffnungen.

Der Durchlassquerschnitt der Seitenöffnungen bei gegebener axialer Erstreckung kann vergrößert werden, wenn die Seitenöffnungen eine längliche Gestalt aufweisen, wobei die größere Erstreckung in Umfangsrichtung liegt.

Die Kraft, die erforderlich ist, um die Manschette in Achsrichtung zu stauchen, damit sie die Öffnungen frei gibt, kann weiter vermindert werden, wenn die elastomere Manschette an ihrer Innenseite einen Verlauf aufweist, der der Bombierung des Schaftes entspricht.

Die Abdichtung im komprimierten Zustand kann verbessert werden, wenn die Manschette an ihren Enden mit ringförmigen Wulsten versehen ist, die unter entsprechender radialer Vorspannung am Schaft anliegen.

Um die beim Umfüllen aus dem Tank verdrängte Luft in den Kanister zurückzuführen, kann die Trennwand eine Durchgangsöffnung enthalten. Durch diese Durchgangsöffnung kann abgedichtet ein Entlüftungsschlauch hindurch führen.

Abgesehen von der Bombierung kann der Schaft im Wesentlichen zylindrisch sein. Er kann sich beidseits der Bombierung zylindrisch fortsetzen, wobei der Durchmesser der zylindrischen Abschnitte im Anschluss an die Bombierung gleich sein kann.

Der Anschlag zum axialen Komprimieren der Manschette kann von einem Bund umfassen, der auf der Außenseite des Schaftes im Abstand zu einer der Seitenöffnungen angeordnet ist.

Ferner kann die Kompressionseinrichtung eine Überwurfmutter aufweisen.

Um ein übermäßiges Anziehen der Überwurfmutter zu verhindern kann diese mit einem Anschlag versehen sein.

Die Überwurfmutter und der Schaft können aus einem geeigneten Kunststoff mit hinreichender Festigkeit gespritzt werden. Beispiele für geeignete Kunststoffe sind: PEHD, PA 66-GF35.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenfalls vorhandene Detail. Die Begriffe "oben" und "unten" bzw. "links" und "rechts" beziehen sich auf die Darstellung in den Figuren.

In der Zeichnung ist ein Ausführungsbeispiel des Gegenstandes der Erfindung dargestellt:
- Fig. 1: zeigt die erfindungsgemäße Fluidverbindungseinrichtung im geschlossenen Zustand, im Längsschnitt.
- Fig. 2: zeigt die Manschette der Fluidverbindungseinrichtung nach Fig. 1, im Längsschnitt.
- Fig. 3: zeigt die erfindungsgemäße Fluidverbindungseinrichtung im Betriebsfall mit einer durchgehenden Fluidverbindung, im Längsschnitt.

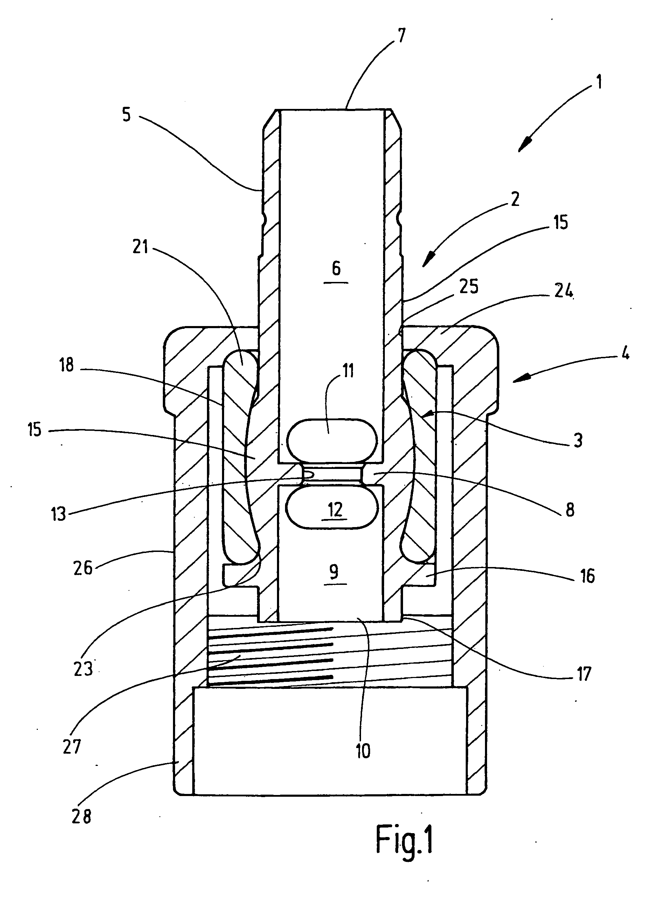

Fig. 1 zeigt in einem Längsschnitt eine Fluidverbindungseinrichtung 1. Zu der Fluidverbindungseinrichtung 1 gehören ein rohrförmiger Schaft 2, eine aus einem elastomeren Material bestehende Manschette 3 sowie eine Überwurfmutter 4. Das Material für die Manschette 3 ist z.B. EPDM.

Der rohrförmige Schaft 2 weist eine im Wesentlichen zylindrische Gestalt mit einer zylindrischen Außenwand 5 auf. In dem Schaft 2 befindet sich ein erster zylindrischer Innenraum 6 der sich zwischen einer Öffnung 7 und einer Trennwand 8 erstreckt. Auf der gegenüberliegenden Seite der Trennwand 8 ein weiterer zylindrischer Innenraum 9 enthalten, der von der Trennwand 8 bis zu einer Öffnung 10 reicht.

Im Bereich des oberen zylindrischen Innenraums 6 ist das an die Öffnung 7 angrenzende Teil des Schaftes 2 als Schlauchanschluss ausgebildet.

Oberhalb der Trennwand 8 enthält die Wand des rohrförmigen Schaftes 2 zwei einander diametral gegenüberliegende Öffnungen 11, von denen wegen der Schnittdarstellung lediglich eine der Öffnungen 11 zu erkennen ist. Die Öffnungen 11 haben eine längsovale Gestalt und erstrecken sich mit ihrer langen Achse in Umfangsrichtung des rohrförmigen Schaftes 2.

Unterhalb der Trennwand 8 sind zwei weitere seitliche Öffnungen 12 vorhanden, die ebenfalls eine längsovale Gestalt hat und die sich mit ihrer längeren Achse in Umfangsrichtung erstreckt.

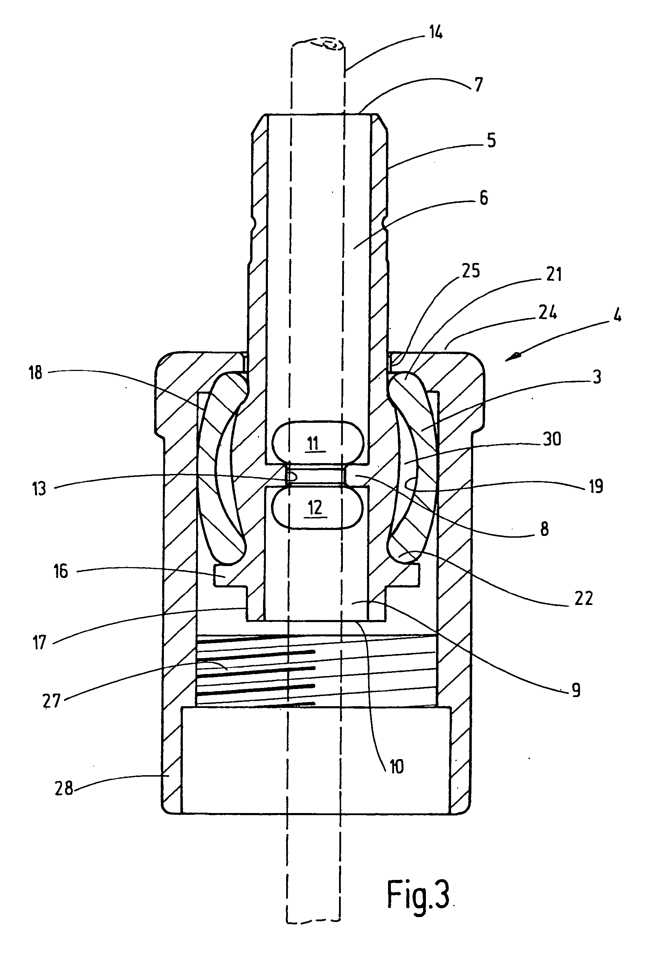

Die Trennwand 8 enthält eine zylindrische Durchgangsbohrung 13, durch die ein Entlüftungsschlauch 14 wie er in Fig. 3 gezeigt ist, abgedichtet hindurch gesteckt werden kann.

Im Bereich der beiden Seitenöffnungen 11, 12 ist der zylindrische Schaft 6 mit einer tonnenförmigen Bombierung 15 versehen, deren dickste Stelle etwa auf der Höhe der Trennwand 8 liegt. Die Erzeugende der Bombierung 15 ist ein Kreisbogen. Die Länge der tonnenförmigen Bombierung ist kürzer als der Schaft 2. Darüber und darunter verbleiben zylindrische Abschnitte. Die Seitenöffnungen 11, 12 münden in die Außenfläche der tonnenförmigen Bombierung 15.

Unterhalb der tonnenförmigen Bombierung 14 befindet sich ein umlaufender Bund 16, der als Widerlager für die Manschette dient. Im Anschluss an den Bund 16 setzt sich die zylindrische Außenwand 5 fort.

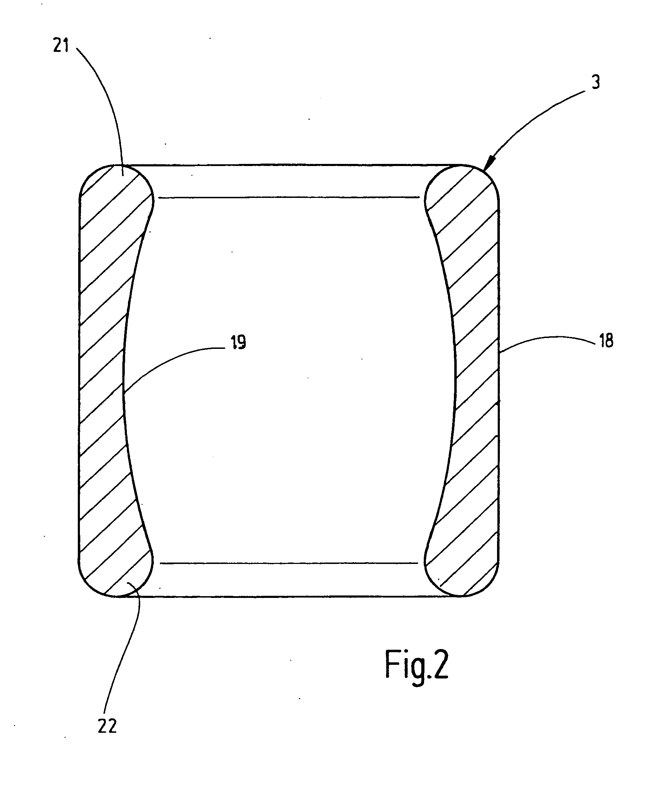

Die Manschette 3 aus elastomerem Material hat die in Fig. 2 gezeigte Gestalt. Sie wird nach außen von einer zylindrischen Umfangsfläche 18 und nach innen zu von einer tonnenförmigen Rotationsfläche 19 begrenzt. Die tonnenförmige Rotationsfläche 19 entspricht in ihrer Gestalt etwa der tonnenförmigen Bombierung 15. An beiden axialen Enden geht die Manschette auf der Innenseite 19 glatt/tangierend in umlaufende Wülste 21 und 22 über. Die Manschette 3 ist so dimensioniert, dass sie, wenn sie auf die tonnenförmige Bombierung 15 aufgesteckt ist, die Seitenöffnungen 11, 12 abdichtend verschließt. Die lichte Weite der Innenfläche 19 ist etwas kleiner als der Außendurchmesser der tonnenförmigen Bombierung 15 an allen Stellen, so dass die Manschette 3 unter Erzeugung einer radialen Vorspannkraft großflächig auf der tonnenförmigen Bombierung 3 aufliegt. In axialer Richtung ist die tonnenförmige Bombierung 15 etwas kürzer als es dem Abstand der Wülste 21, 22 voneinander entspricht, so dass der Wulst 21 ein Stück weit auf der zylindrischen Außenfläche 5 gleiten kann ehe er in dem Bereich der tonnenförmigen Bombierung 15 kommt. Das untere Ende der Manschette 3 mit dem Wulst 22 liegt dagegen unmittelbar auf dem Bund 16 auf, der mit einer entsprechenden verrundeten Hohlkehle 23 in die Bombierung 15 übergeht.

Als Vorspanneinrichtung für die Manschette 3 dient die Überwurfmutter 4. Die Überwurfmutter 4 weist einen Boden 24 mit einer Durchgangsöffnung 25 auf, durch die der rohrförmige Schaft 2 mit seinem oberen zylindrischen Ende hindurch führt.

Die Überwurfmutter 4 umfasst ferner einen etwa zylindrischen Kragen 26, dessen innere Weite, wie gezeigt, größer ist als der Außendurchmesser der Manschette 3. Im Bereich des unteren Endes des rohrförmigen Schaftes 2 ist die Überwurfmutter 4 mit einem Innengewinde 27 versehen, an das sich in Richtung auf das freie Ende der Überwurfmutter 4 ein zylindrischer Fortsatz 28 anschließt. Die Weite des zylindrischen Fortsatzes 28 ist größer als der Nenndurchmesser des Gewindes 27.

Nachfolgend ist nunmehr die Funktionsweise der Fluidverbindungseinrichtung 1 unter weiterer Bezugnahme auf die Fig. 3 dargestellt.

Solange die Überwurfmutter 4 nicht auf den Stutzen des zu füllenden Tanks aufgeschraubt ist, erzeugt sie in axialer Richtung keinen Druck auf die Manschette 3. Die Manschette 3 ist in axialer Richtung entspannt und liegt abdichtend auf den insgesamt vier Seitenöffnungen 11, 12 auf. An das obere Ende des rohrförmigen Schaftes 2 ist ein Schlauch angeschlossen, der zu dem Kanister führt, aus dem die Flüssigkeit abzufüllen ist. Dieser Schlauch hat einen größeren Durchmesser als die Öffnung 25. Der aufgesetzte Schlauch wirkt gleichzeitig als Anschlag, der ein Verlieren der Überwurfmutter 4 verhindert. Zusätzlich kann als Schutz gegen Verschmutzung in den zylindrischen Fortsatz 28 ein nicht weiter gezeigter Deckel eingesteckt sein.

Da die Manschette 3 stramm auf der tonnenförmigen Bombierung 15 aufliegt, ist der mit der einzufüllenden Flüssigkeit gegebenenfalls gefüllte obere Innenraum 6 abgesperrt und die Flüssigkeit kann nicht über die beiden Seitenöffnungen 11 austreten.

Zum Umfüllen der umzufüllen Flüssigkeit aus dem Kanister in einen Tank wird die Überwurfmutter 4 auf den entsprechenden Einfüllstutzen aufgeschraubt, der mit einem Außengewinde ausgestattet ist. Dabei stützt sich der Bund 23 an dem Rand des Einfüllstutzens ab, während gleichzeitig die Überwurfmutter 4 angezogen wird. Da der rohrförmige Schaft 2 wegen der formschlüssigen Anlage des Bunds 23 an dem Einfüllstutzen der Bewegung der Mutter 4 nicht folgen kann, verkürzt sich der Abstand zwischen dem Bund 23 und dem Boden 24 der Überwurfmutter 4. Durch diese Abstandsverringerung wird die elastomere Manschette 3 in axialer Richtung gestaucht.

Beim Stauchen legt sie sich einerseits in der Hohlkehle 23 und andererseits an der Unterseite des Bodens 24 an. Der obere Wulst 21 gleitet auf der zylindrischen Außenfläche 5 des oberen Abschnittes des rohrförmigen Schaftes 2 bis der Wulst 21 an den Beginn der tonnenförmigen Verdickung oder Ausbauchung 15 ankommt. Aufgrund der axialen Stauchung wird die elastomere Manschette 3 eine Gestalt annehmen, wie sie in Fig. 3 gezeigt ist. Sie wird im mittleren Bereich zwischen den beiden Endwülsten 21 und 22 von der tonnenförmigen Bombierung 15 abheben. Es entsteht ein im Querschnitt sichelförmige Ringspalt 30, der oben und unten von den an der Zylinderwand 5 anliegenden Wulsten 21, 22 abgedichtet ist. In diesem Ringspalt 30 münden die beiden oberhalb der Trennwand 8 liegenden Seitenöffnungen 11 sowie die beiden unterhalb der Trennwand 8 liegenden Seitenöffnung. Die oberhalb der Trennwand 8 liegenden Seitenöffnungen 11 sind so über den Ringspalt 30 mit den darunter befindlichen Seitenöffnungen 12 strömungsmäßig verbunden, womit eine strömungsmäßige Verbindung zwischen dem Innenraum 6 und dem zylindrischen Innenraum 9 entsteht. Das umzufüllende Medium kann nunmehr aus dem Kanister durch den Anschlussschlauch in das obere Ende des rohrförmigen Schaftes 2 einströmen.

Am unteren Ende des oberen Innenraums 6 fließt das Medium durch die Seitenöffnungen 11 in den Ringspalt 30 und von dort in die Seitenöffnungen 12. Durch diese Seitenöffnungen 12 kommt das Medium in den unteren zylindrischen Innenraum 9 und fließt von dort in den aufzufüllenden Tank. Da beim Auffüllen die in dem Tank vorhandene Luft verdrängt werden muss, ist der Belüftungsschlauch 14 vorgesehen. Der Belüftungsschlauch 14 führt in den Vorratskanister hinein und endet bei der Fluidverbindungseinrichtung 1 knapp unterhalb der unteren Öffnung 10. Die zu verdrängende Luft strömt also oberhalb der Flüssigkeit in dem Tank durch den Schlauch 14 in den Kanister. Somit dringen keinerlei Dämpfe oder Gase aus dem Tank oder dem Kanister nach außen. Vielmehr bleibt das System während des Nachfüllvorgangs nach außen unbelüftet.

Der Belüftungsschlauch 14 ist derart in die Bohrung 13 eingesetzt, dass keine Flüssigkeit in einem möglichen Spalt zwischen dem Schlauch 14 und er Wand der Bohrung 13 hindurch strömen kann.

Nachdem der Füllvorgang abgeschlossen ist, wird die Überwurfmutter von dem Tankeinfüllstutzen abgeschraubt, wodurch die zuvor auf die Manschette 3 wirkende Axialkraft verschwindet. Die Manschette 3 kann sich in Längsrichtung entspannen und wird sich dichtend auf die Außenseite der tonnenförmigen Bombierung 15 auflegen und wie zuvor die Seitenöffnungen 11, 12 verschließen.

Eine Fluidverbindungseinrichtung weist einen rohrförmigen Schaft auf, dessen Innenraum durch eine Trennwand in zwei voneinander getrennte Teilräume aufgeteilt ist. In jeden der beiden Teilräume mündet jeweils eine Seitenöffnung. Die Seitenöffnungen werden von einer elastomeren Manschette überdeckt, so dass die Seitenöffnungen abgedichtet verschlossen sind, solange auf die Manschette keine weiteren äußeren Kräfte einwirken. Mit Hilfe einer Überwurfmutter, die zum Anschluss des rohrförmigen Schaftes an einen Behälter vorgesehen ist, auf dessen Stutzen aufgeschraubt wird, wird die Manschette in axialer Richtung zusammengedrückt und erzeugt einen über die Seitenöffnungen sich erstreckenden Ringspalt, durch den die Seitenöffnungen nunmehr strömungsmäßig in Verbindung stehen.

## Patentansprüche

1. Fluidverbindungseinrichtung (1),
mit einem rohrförmigen Schaft (2), der wenigstens zwei Seitenöffnungen (11,12) aufweist, die in Längsrichtung des Schafts (2) einander benachbart sind und die eine Fluidverbindung zwischen dem Innenraum des Schafts (6,9) und der Außenumgebung schaffen,
mit einer Trennwand (8), die in dem Innenraum des Schafts (2) enthalten ist und die zwischen den wenigstens zwei Seitenöffnungen (11,12) vorgesehen ist, derart dass der Innenraum in zwei strömungsmäßig voneinander getrennte Abschnitte (6,9) aufgeteilt ist,
mit einer elastomeren Manschette (3), die den Schaft (2) auf der Höhe der wenigstens zwei Seitenöffnungen (11,12) umgibt,
dadurch gekennzeichnt, dass
die elastomere Manschette (3)in Längsrichtung komprimierbar ist, und im entspannten Zustand dichtend auf den Seitenöffnungen (11,12) aufliegt und im komprimierten Zustand mit dem Schaft (2) einen nach außen abgedichteten Ringspalt (30) bildet, der eine Fluidverbindung zwischen den beiden Innenraumabschnitten (6,9) entstehen lässt, und gekennzeichet durch
eine Kompressionseinrichtung (4,16), die dazu eingerichtet ist, die Manschette (3) bedarfsweise in Längsrichtung zu komprimieren.

2. Fluidverbindungseinrichtung nach Anspruch 1, **dadurch gekennzeichnet, dass** der rohrförmige Schaft (2) im Bereich der Seitenöffnungen (11,12) eine tonnenförmige Bombierung (12) aufweist.

3. Fluidverbindungseinrichtung nach Anspruch 1, **dadurch gekennzeichnet, dass** der größte Durchmesser der tonnenförmigen Bombierung (15) bezogen auf die axiale Erstreckung mittig zwischen den Seitenöffnungen (11,12) liegt.

4. Fluidverbindungseinrichtung nach Anspruch 1, **dadurch gekennzeichnet, dass** die Seitenöffnungen (11,12) eine längliche Gestalt aufweisen, die Erstreckung in Umfangsrichtung größer ist als ihre Erstreckung in Axialrichtung des Schaftes (2).

5. Fluidverbindungseinrichtung nach Anspruch 2, **dadurch gekennzeichnet, dass** die elastomere Manschette (3) an ihrer Innenseite (19) einen Verlauf aufweist, der der Bombierung (15) des Schaftes (2) entspricht.

6. Fluidverbindungseinrichtung nach Anspruch 1, **dadurch gekennzeichnet, dass** die Manschette (3) an ihren Enden mit ringförmigen Wulsten (21,22) versehen ist.

7. Fluidverbindungseinrichtung nach Anspruch 1, **dadurch gekennzeichnet, dass** die Trennwand (8) eine Durchgangsbohrung (13) enthält.

8. Fluidverbindungseinrichtung nach Anspruch 7, **dadurch gekennzeichnet, dass** durch die Durchgangsbohrung (13) abgedichtet ein Entlüftungsschlauch (14) hindurch führt.

9. Fluidverbindungseinrichtung nach Anspruch 1, **dadurch gekennzeichnet, dass** zu der Kompressionseinrichtung ein Stützbund (16) für die Manschette (3) gehört, der auf dem Schaft (2) im axialen Abstand von der benachbarten Seitenöffnung (12) angeordnet ist.

10. Fluidverbindungseinrichtung nach Anspruch 1, **dadurch gekennzeichnet, dass** die Kompressionseinrichtung (16,4) von einer Überwurfmutter (4) mit Innen- oder Außengewinde (27) gebildet ist.

11. Fluidverbindungseinrichtung nach Anspruch 10, **dadurch gekennzeichnet, dass** die Überwurfmutter (4) eine Anschlageinrichtung (28) aufweist, die ein übermäßiges Aufschrauben auf einen Anschlussstutzen blockiert.

12. Fluidverbindungseinrichtung nach Anspruch 10, **dadurch gekennzeichnet, dass** die Überwurfmutter (4) eine über ihr Gewinde (27) überstehende zylindrische Verlängerung (28) aufweist.

13. Fluidverbindungseinrichtung nach Anspruch 1, **dadurch gekennzeichnet, dass** ein Ende des Schafts als Schlauchanschlussstutzen ausgebildet ist.

## Claims

1. Fluid connection device (1),
with a tubular shaft (2), which has at least two side openings (11, 12), which are adjacent to one another in the longitudinal direction of the shaft (2) and create a fluid connection between the interior of the shaft (6, 9) and the outside environment,
with a partition wall (8), which is contained in the interior of the shaft (2) and is provided between the at least two side openings (11, 12) such that the interior is divided into two sections (6, 9) separate from one another with respect to flow,
with an elastomeric collar (3), which surrounds the shaft (2) at the level of the at least two side openings (11, 12),
**characterised in that**
the elastomeric collar (3) can be compressed in the longitudinal direction, and in the relaxed state lies on the side openings (11, 12) forming a seal and in the compressed state forms with the shaft (2) an annular gap (30), which is sealed to the outside and allows the formation of a fluid connection between the two sections of the interior (6, 9), and **characterised by**
a compression device (4, 16), which is fitted to compress the collar (3) in the longitudinal direction as required.

2. Fluid connection device according to claim 1, **characterised in that** the tubular shaft (2) has a barrel-shaped bulge (12) in the region of the side openings (11, 12).

3. Fluid connection device according to claim 1, **characterised in that** the largest diameter of the barrel-shaped bulge (15) relative to the axial extent lies centrally between the side openings (11, 12).

4. Fluid connection device according to claim 1, **characterised in that** the side openings (11, 12) have an elongated structure and the extent in the peripheral direction is larger than its extent in the axial direction of the shaft (2).

5. Fluid connection device according to claim 2, **characterised in that** on its inner surface (19) the elastomeric collar (3) has a course corresponding to the bulge (15) of the shaft (2).

6. Fluid connection device according to claim 1, **characterised in that** the collar (3) is provided with ring-shaped beads (21, 22) on its ends.

7. Fluid connection device according to claim 1, **characterised in that** the partition wall (8) contains a through-hole (13).

8. Fluid connection device according to claim 7, **characterised in that** a ventilation hose (14) runs through the through-hole (13) forming a seal.

9. Fluid connection device according to claim 1, **characterised in that** the compression device includes a support shoulder (16) for the collar (3), which is arranged on the shaft (2) axially spaced from the adjacent side opening (12).

10. Fluid connection device according to claim 1, **characterised in that** the compression device (16, 4) is formed by a screw cap (4) with inside and outside thread (27).

11. Fluid connection device according to claim 10, **characterised in that** the screw cap (4) has a stop device (28), which blocks excessive tightening onto a connecting piece.

12. Fluid connection device according to claim 10, **characterised in that** the screw cap (4) has a cylindrical extension (28) projecting beyond its thread (27).

13. Fluid connection device according to claim 1, **characterised in that** an end of the shaft is configured as a hose connecting piece.

## Revendications

1. Dispositif de communication fluidique (1),
comprenant une tige (2) tubulaire qui présente au moins deux ouvertures latérales (11, 12) qui sont voisines l'une de l'autre, dans la direction longitudinale de la tige (2), et qui créent une communication fluidique entre l'espace intérieur de la tige (6, 9) et l'extérieur,
comprenant une cloison (8) qui est contenue dans l'espace intérieur de la tige (2) et qui est prévue entre les ouvertures latérales (11, 12), au nombre d'au moins deux, de telle sorte que l'espace intérieur est divisé en deux parties (6, 9) séparées l'une de l'autre sur le plan de l'écoulement,
comprenant une manchette (3) élastomère qui entoure la tige (2) à hauteur des deux ouvertures latérales (11, 12), au nombre d'au moins deux,
**caractérisé en ce que**
la manchette (3) élastomère peut être comprimée dans la direction longitudinale et, à l'état détendu, est appliquée de façon étanche sur les ouvertures latérales (11, 12) et, à l'état comprimé, forme avec la tige (2) un espace annulaire (30) étanche vis-à-vis de l'extérieur, qui crée une communication fluidique entre les deux parties de l'espace intérieur (6, 9), et **caractérisé en ce qu'**il comprend
un dispositif de compression (4, 16) qui est conçu pour comprimer au besoin la manchette (3) dans la direction longitudinale.

2. Dispositif de communication fluidique selon la revendication 1, **caractérisé en ce que** la tige (2) tubulaire présente un bombement (15) en forme de tonneau dans la région des ouvertures latérales (11, 12).

3. Dispositif de communication fluidique selon la revendication 1, **caractérisé en ce que**, rapporté à la dimension axiale, le plus grand diamètre du bombement (15) en forme de tonneau se situe au milieu entre les ouvertures latérales (11, 12).

4. Dispositif de communication fluidique selon la revendication 1, **caractérisé en ce que** les ouvertures latérales (11, 12) présentent une forme allongée et leur dimension dans la direction circonférentielle est plus grande que leur dimension dans la direction axiale de la tige (2).

5. Dispositif de communication fluidique selon la revendication 2, **caractérisé en ce que** la manchette (3) élastomère présente sur sa face interne (19) une forme qui correspond au bombement (15) de la tige (2).

6. Dispositif de communication fluidique selon la revendication 1, **caractérisé en ce que** la manchette (3) est pourvue à ses extrémités de bourrelets (21, 22) annulaires.

7. Dispositif de communication fluidique selon la revendication 1, **caractérisé en ce que** la cloison (8) comporte un trou débouchant (13).

8. Dispositif de communication fluidique selon la revendication 7, **caractérisé en ce que** le trou débouchant (13) est traversé de manière étanche par un tuyau de ventilation (14).

9. Dispositif de communication fluidique selon la revendication 1, **caractérisé en ce que** le dispositif de compression comprend un collet d'appui (16) pour la manchette (3), qui est disposé sur la tige (2), à distance axiale de l'ouverture latérale (12) voisine.

10. Dispositif de communication fluidique selon la revendication 1, **caractérisé en ce que** le dispositif de compression (16, 4) est constitué d'un écrou-raccord (4) à filetage femelle ou mâle (27).

11. Dispositif de communication fluidique selon la revendication 10, **caractérisé en ce que** l'écrou-raccord (4) présente un dispositif de butée (28) qui empêche un vissage excessif sur un embout de raccordement.

12. Dispositif de communication fluidique selon la revendication 10, **caractérisé en ce que** l'écrou-raccord (4) présente un prolongement (28) cylindrique qui dépasse par rapport à son filetage (27).

13. Dispositif de communication fluidique selon la revendication 1, **caractérisé en ce qu'**une extrémité de la tige est réalisée sous forme de raccord de tuyau.
